(19) Europäisches Patentamt / European Patent Office / Office européen des brevets

(11) **EP 2 636 999 B1**

(12) **EUROPEAN PATENT SPECIFICATION**

(45) Date of publication and mention
of the grant of the patent:
**25.04.2018 Bulletin 2018/17**

(51) Int Cl.:
**G01F 1/66** *(2006.01)*     **G01F 1/704** *(2006.01)*
**G01F 1/74** *(2006.01)*     **G01F 1/708** *(2006.01)*

(21) Application number: **13157993.0**

(22) Date of filing: **06.03.2013**

(54) **Ultrasonic measuring device**

Ultraschall-Messvorrichtung

Dispositif de mesure ultrasonique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2012 JP 2012051498**

(43) Date of publication of application:
**11.09.2013 Bulletin 2013/37**

(73) Proprietor: **Yokogawa Electric Corporation
Tokyo 180-8750 (JP)**

(72) Inventors:
• **Fukuhara, Satoshi
Tokyo (JP)**
• **Okamoto, Kazutoshi
Tokyo (JP)**
• **Itou, Rai
Tokyo (JP)**
• **Kogi, Fumiya
Tokyo (JP)**

(74) Representative: **Henkel, Breuer & Partner
Patentanwälte
Maximiliansplatz 21
80333 München (DE)**

(56) References cited:
**EP-A2- 0 031 102     EP-A2- 2 202 494
WO-A1-2006/080182     JP-A- 2005 181 268**

**Description**

BACKGROUND OF THE INVENTION

Field of the Invention

The present invention relates to an ultrasonic measuring device that measures the flow speed and flow volume of a fluid by using ultrasonic waves.

Priority is claimed on Japanese Patent Application No. 2012-051498, filed March 8, 2012, the content of which is incorporated herein by reference.

Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

An ultrasonic measuring device is one conventionally known measuring device for measuring the flow speed and flow volume of a fluid flowing in piping. An advantage of this ultrasonic measuring device is that it can take measurements merely by attaching transducers for sending and receiving ultrasonic waves to the outer surface of the piping, without carrying out work such as making a hole in the piping. This ultrasonic measuring device typically uses transmission method (propagation time difference method) or reflection method (reflection correlation method).

An ultrasonic measuring device using transmission method sends and receives an ultrasonic signal diagonally through the fluid flowing in the piping, and measures the flow speed and the like of the fluid flowing in the piping by determining the difference between the propagation time when an ultrasonic signal was sent and received in the direction of the flow of the fluid, and the propagation time when an ultrasonic signal was sent and received in an opposite direction to the flow of the fluid. In contrast, an ultrasonic measuring device using reflection method sends a plurality of ultrasonic signals diagonally through the fluid flowing in the piping, receives a plurality of reflection signals from air-bubbles and small particles contained in the fluid, and measures the flow speed and the like from a correlation of these received signals.

Japanese Unexamined Patent Application, First Publication No. 2005-181268 discloses an ultrasonic measuring device that can measure using both transmission method and reflection method, the device switching between the two methods in accordance with a correlation value or the strength of a receive signal obtained by receiving an ultrasonic signal through the fluid flowing in the piping. Japanese Unexamined Patent Application, First Publication No. 2010-181326 discloses an ultrasonic measuring device that, when using transmission method to measure the flow volume, determines flow volume correction coefficients from average flow speeds measured using reflection method and transmission method, and calculates an accurate flow volume based on the average flow speed measured using transmission method and the flow volume correction coefficients.

While an ultrasonic measuring device using transmission method can perform measuring even if the fluid does not contain any air-bubbles, a very large volume of air-bubbles in the fluid will obstruct the ultrasonic signal and make measuring impossible. On the other hand, while an ultrasonic measuring device using reflection method can perform measuring even if there is a very large volume of air-bubbles in the fluid, when the fluid contains no air-bubbles at all, a reflection signal cannot be obtained from air-bubbles and measuring therefore becomes impossible.

Since the ultrasonic measuring device disclosed in Japanese Unexamined Patent Application, First Publication No. 2005-181268 can switch between measuring using transmission method and measuring using reflection method, if the measuring method is switched in accordance with the volume of the air-bubbles contained in the fluid, measuring could conceivably be performed irrespective of the volume of the air-bubbles contained in the fluid. It is difficult to achieve high precision when measuring is performed using only transmission method, or using only reflection method. For example, when measuring is performed using only reflection method, the measuring precision is adversely affected by factors such as the oscillation state of the ultrasonic waves, resonance with the piping, and reverberation near the wall of the piping.

Since the ultrasonic measuring device disclosed in Japanese Unexamined Patent Application, First Publication No. 2010-181326 calculates the flow volume based on the average flow speed measured using transmission method and flow volume correction coefficients determined from average flow speeds measured using reflection method and transmission method, it can achieve high measuring precision. However, the ultrasonic measuring device disclosed in Japanese Unexamined Patent Application, First Publication No. 2010-181326 can only perform measuring when the volume of air-bubbles contained in the fluid is sufficient to enable measuring by both transmission and reflection methods.

WO 2006/080182 A1 discloses an ultrasonic flowmeter and an ultrasonic flowmeter employing two methods. Specifically, a flow velocity distribution measurement unit acquires a flow velocity distribution along a measurement line according to a measurement result obtained by a sensor. According to a Doppler shift frequency obtained by the processing of the flow velocity distribution measurement unit, its average value, a Doppler spectrum, and the like, a power/standard deviation calculation unit calculates a power and standard deviation for each channel and judges the state of the flowing body to be measured, according to the calculation result.

EP 0 031 102 A2 discloses an ultrasonic flow meter in which mode control switching circuitry includes fluid condition detecting means selectively energizing one or two transmitters in the transducers each of which then feeds a beam of ultrasonic waves to the fluid. Receiver means in the transducers selectively receives both the transmission (transit) mode waves and the reflection (Doppler-shifted) mode waves in accordance with the current condition of the fluid.

## SUMMARY

According to the present invention, there is provided an ultrasonic measuring device as set out in independent claim 1 and an ultrasonic measuring method as set out in independent claim 10. Advantageous developments are defined in the dependent claims.

The ultrasonic measuring method may further include: determining whether or not the first correlation value exceeds a first threshold that is set with consideration for the volume of air-bubbles contained in the fluid; and determining whether or not the second correlation value exceeds a second threshold that is set with consideration for the volume of air-bubbles contained in the fluid.

The ultrasonic measuring method may further include: outputting the first flow volume that has been corrected by using the first correction coefficient if determined that the first correlation value exceeds the first threshold; and outputting the second flow volume that has been corrected by using the second correction coefficient if determined that the first correlation value does not exceed the first threshold and the second correlation value exceeds the second threshold.

The ultrasonic measuring method may further include: calculating the first correction coefficient if determined that the second correlation value exceeds the second threshold; and calculating the second correction coefficient if determined that the first correlation value exceed the first threshold and the second correlation value exceed the second threshold.

The first correction coefficient may indicate a ratio between the flow volume of the fluid determined from the second receive signal and a flow volume based on an average flow speed. The second correction coefficient may indicate a ratio between the first flow volume corrected by using the first correction coefficient and the flow volume of the fluid determined from the second receive signal.

The ultrasonic measuring method may further include: performing a correlation operation of a receive signal, which is obtained when the ultrasonic signal was sent and received in a direction of a flow of the fluid, and a receive signal, which is obtained when the ultrasonic signal was sent and received in an opposite direction to the flow of the fluid, so as to determine an average speed of the fluid flowing in a piping by determining a time difference when a correlation value reaches its maximum.

## BRIEF DESCRIPTION OF THE DRAWINGS

The above features and advantages of the present invention will be more apparent from the following description of certain preferred embodiments taken in conjunction with the accompanying drawings, in which:

FIG. 1 is a block diagram illustrating the constitution of primary parts of an ultrasonic measuring device in accordance with the first preferred embodiment of the present invention;
FIG. 2 is a block diagram illustrating the constitution of primary parts of a signal processing unit of an ultrasonic measuring device in accordance with the first preferred embodiment of the present invention;
FIG. 3 is a diagram illustrating one example of flow speed distribution determined using an ultrasonic measuring device in accordance with the first preferred embodiment of the present invention;
FIG. 4 is a diagram illustrating conditions for calculating a correction coefficient in the ultrasonic measuring device in accordance with the first preferred embodiment of the present invention; and
FIG. 5 is a diagram illustrating conditions for outputting a measurement signal in an ultrasonic measuring device in accordance with the first preferred embodiment of the present invention.

## DETAILED DESCRIPTION OF THE PREFERRED EMBODIMENTS

The present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

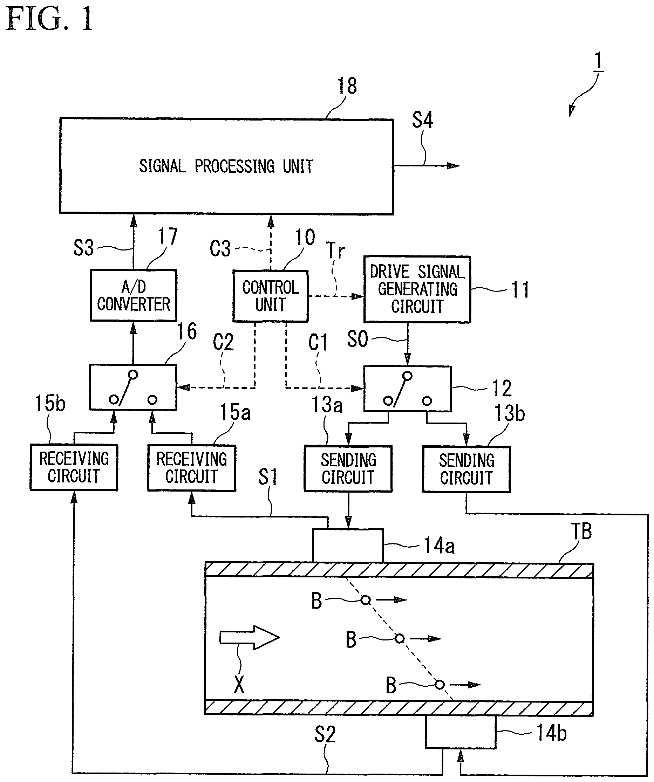

An ultrasonic measuring device in accordance with a first preferred embodiment of the invention will be described with reference to the drawings. FIG. 1 is a block diagram illustrating the constitution of primary parts of an ultrasonic measuring device in accordance with the first preferred embodiment of the present invention. As shown in FIG. 1, an ultrasonic measuring device 1 in accordance with the first preferred embodiment of the present invention includes a control unit 10, a drive signal generating circuit 11, a send switch 12, sending circuits 13a and 13b, transducers 14a and 14b, receiving circuits 15a and 15b, a receive switch 16, an A/D converter 17, and a signal processing unit 18, and uses ultrasonic signals to measure the flow speed and flow volume of a fluid X flowing in piping TB.

The ultrasonic measuring device 1 in accordance with the first preferred embodiment of the present invention can measure using transmission method (propagation time difference method) and using reflection method (reflection correlation method). When measuring with transmission method, the ultrasonic measuring device 1 sends and receives an ultrasonic signal diagonally through the fluid X flowing in the piping TB, and measures the flow volume and the like of the fluid X flowing in the piping TB by determining the difference between the propagation time when an ultrasonic signal was sent and received in the direction of the flow of the fluid X, and the propagation time when an ultrasonic signal was sent and received in an opposite direction to the flow of the fluid X. When measuring with reflection method, the ultrasonic measuring device 1 sends a plurality of ultrasonic signals diagonally through the fluid X flowing in the piping TB, receives a plurality of reflection signals from air-bubbles B contained in the fluid X, and measures the flow volume and the like of the fluid X flowing in the piping TB by executing a correlation process to the received signals.

The control unit 10 controls the overall operation of the ultrasonic measuring device 1. For example, it outputs a trigger signal Tr to the drive signal generating circuit 11 and controls the sending of ultrasonic signals to the fluid X. Also, the control unit 10 outputs control signals C1 and C2 to the send switch 12 and the receive switch 16, outputs a control signal C3 to the signal processing unit 18, and controls the switching between transmission method and reflection method described above.

Based on the trigger signal Tr output from the control unit 10, the drive signal generating circuit 11 outputs a drive signal S0 for generating an ultrasonic signal to be sent to the fluid X. The send switch 12 inputs the drive signal S0 from the drive signal generating circuit 11, and, based on the switch signal C1 output from the control unit 10, switches the output destination of the drive signal S0 to one of the sending circuits 13a and 13b.

The sending circuit 13a outputs the drive signal S0 from the send switch 12 to the transducer 14a, and makes it send an ultrasonic signal to the fluid X. Similarly, the sending circuit 13b outputs the drive signal S0 from the send switch 12 to the transducer 14b, and makes it send an ultrasonic signal to the fluid X. The transducers 14a and 14b are attached to the outer surface of the piping TB such that it is sandwiched between them when viewed in the direction of the flow of the fluid X (towards the right side of the page), and send and receive ultrasonic signals based on the drive signal S0. These transducers 14a and 14b can be attached to the piping TB without carrying out work such as making a hole in the piping TB, and, as shown in FIG 1, the transducer 14b is attached downstream from the transducer 14a (downstream in the direction of the fluid X is flowing in).

Specifically, based on the drive signal S0 output from the sending circuit 13a, the transducer 14a sends an ultrasonic signal diagonally through the fluid X flowing in the piping TB (i.e. in the direction heading toward the transducer 14b), receives a transmission signal or a reflection signal of the ultrasonic signal obtained from the fluid X, and outputs a receive signal S1. The transmission signal is an ultrasonic signal that was sent from the transducer 14b and transmitted through the fluid X, while the reflection signal is an ultrasonic signal that was sent from the transducer 14a and reflected by air-bubbles B contained in the fluid X.

Based on the drive signal S0 output from the sending circuit 13b, the transducer 14b sends an ultrasonic signal diagonally through the fluid X flowing in the piping TB (i.e. in the direction heading toward the transducer 14a), receives a transmission signal or a reflection signal of the ultrasonic signal obtained from the fluid X, and outputs a receive signal S2. The transmission signal is an ultrasonic signal that was sent from the transducer 14a and transmitted through the fluid X, while the reflection signal is an ultrasonic signal that was sent from the transducer 14b and reflected by air-bubbles B contained in the fluid X.

The receiving circuit 15a amplifies the receive signal S1 output from the transducer 14a with a predetermined amplification factor, and the receiving circuit 15b amplifies the receive signal S2 output from the transducer 14b with a predetermined amplification factor. The receive switch 16 inputs the receive signals S1 and S2 amplified by the receiving circuits 15a and 15b, and, based on the switch signal C2 output from the control unit 10, switches one of the receive signals S1 and S2 for output to the A/D converter 17. The A/D converter 17 performs a sampling process to the receive signals S1 and S2 (analog signals) output from the receive switch 16, and converts them to a receive signal S3 (digital signal).

The signal processing unit 18 performs a process complying with the control signal C3 from the control unit 10 to the receive signal S3 output from the A/D converter 17, measures the flow speed and the flow volume of the fluid X flowing in the piping TB, and outputs a measurement signal S4 indicating the measurement result. In the first preferred embodiment, the signal processing unit 18 outputs a measurement signal S4 indicating a measurement result of the flow volume of the fluid X flowing in the piping TB.

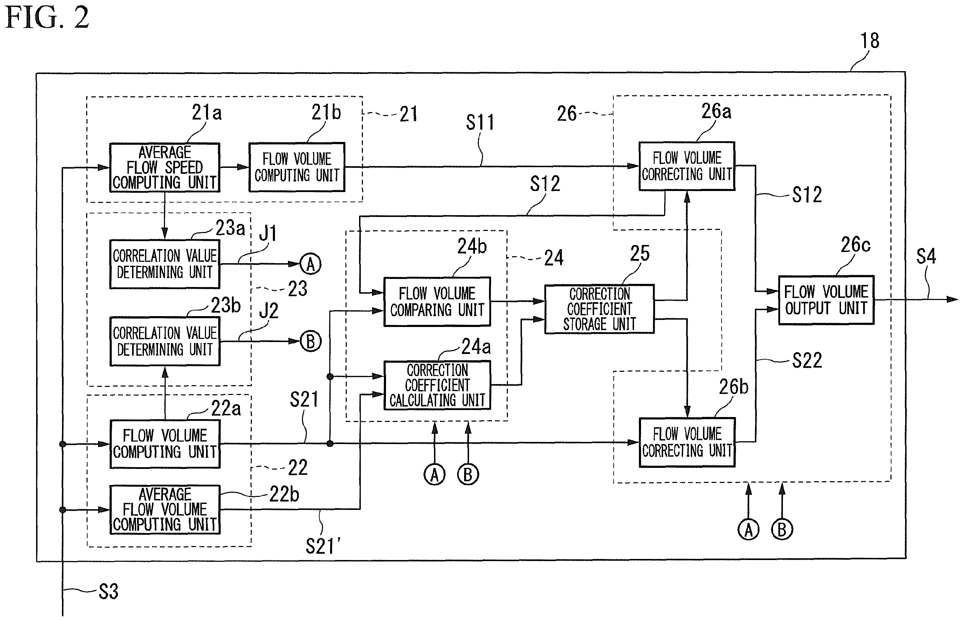

FIG. 2 is a block diagram illustrating the constitution of primary parts of a signal processing unit of an ultrasonic measuring device in accordance with the first preferred embodiment of the present invention. As shown in FIG. 2, the signal processing unit 18 includes a transmission method computing unit 21 (first computing unit), a reflection method computing unit 22 (second computing unit), an air-bubble volume determining unit 23 (determining unit), a correction coefficient computing unit 24, a correction coefficient storage unit 25 (storage unit), and a correcting unit 26.

The transmission method computing unit 21 may hereinafter be referred to as a first computing unit. The reflection method computing unit 22 may hereinafter be referred to as a second computing unit. The air-bubble volume determining unit 23 may hereinafter be referred to as a determining unit. The correction coefficient storage unit 25 may hereinafter be referred to as a storage unit. The control signal C3 from the control unit 10 is not shown in FIG. 2.

The transmission method computing unit 21 includes an average flow speed computing unit 21a and a flow volume computing unit 21b. The transmission method computing unit 21 performs a computation needed to perform measuring using the transmission method to a receive signal S3 from the A/D converter 17, and determines the average flow speed and the flow volume of the fluid X flowing in the piping TB. The average flow speed computing unit 21a performs a correlation operation of the receive signal S3 obtained when the ultrasonic signal was sent and received in the direction of the flow of the fluid X, and the receive signal S3 obtained when the ultrasonic signal was sent and received in an opposite direction to the flow of the fluid X, and determines the average speed of the fluid X flowing in the piping TB by determining the time difference when the correlation value reaches its maximum.

The flow volume computing unit 21b multiplies the average flow speed of the fluid X determined by the average flow speed computing unit 21a by the cross-sectional area of the piping TB, and thereby determines the flow volume of the fluid X flowing in the piping TB (first flow volume). Specifically, if V1 is the average speed of the fluid X determined by the average flow speed computing unit 21a and r is the cross-sectional area of the piping TB, the flow volume computing unit 21b determines the flow volume of the fluid X by calculating $V1 \times \pi r^2$. When the flow volume of the fluid X is determined, the flow volume computing unit 21b outputs a flow volume signal S11 indicating the flow volume of the fluid X.

The reflection method computing unit 22 includes a flow volume computing unit 22a and an average flow volume computing unit 22b. The reflection method computing unit 22 performs a computation needed to perform measuring using the transmission method to a receive signal S3 from the A/D converter 17, and determines a flow volume of the fluid X flowing in the piping TB, and a flow volume based on an average flow speed. The flow volume computing unit 22a determines the flow speed distribution of the fluid X by performing a correlation calculation using a plurality of receive signals S3 (signals obtained by receiving a reflection signal of the ultrasonic signal) obtained when an ultrasonic signal was sent through the fluid X at predetermined intervals of time (e.g. several hundred $\mu$ sec), and uses the flow speed distribution to determine the flow volume of the fluid X flowing in the piping TB (second flow volume). While the average flow volume computing unit 22b determines the flow speed distribution of the fluid X in a similar manner to that of the flow volume computing unit 22a, it uses an average speed obtained by averaging the flow speed distribution to determine the flow volume based on an average flow speed of the fluid X flowing in the piping TB.

Specifically, the flow volume computing unit 22a and the average flow volume computing unit 22b divide a plurality of receive signals S3 obtained by sending an ultrasonic signal through the fluid X a plurality of times into a plurality of sections corresponding to their temporal positions, and perform a correlation process to each section. A time interval with the maximum correlation is determined for every section, and the flow speed of the fluid X in every section is determined from each time interval, whereby the flow speed distribution of the fluid X in the diameter direction of the piping TB is determined.

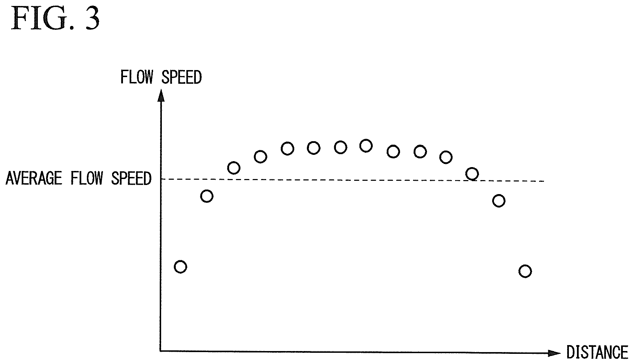

FIG. 3 is a diagram illustrating one example of flow speed distribution determined using an ultrasonic measuring device in accordance with the first preferred embodiment of the present invention. In FIG. 3, the horizontal axis is the distance (the distance in the diameter direction of the piping TB) from one of the transducers that is sending and receiving ultrasonic signals (e.g. transducer 14a), and vertical axis is the flow speed of the fluid X. The white circles in FIG. 3 show the flow speed at each distance (measurement point) where a measurement was taken. As shown in FIG. 3, the distribution is such that the flow speed of the fluid X is higher in the center portion of the piping TB, and decreases toward the inner wall of the piping TB.

The flow volume computing unit 22a integrates the cross-sectional area of the piping TB (the cross-sectional area of the piping TB near each measurement point) over the flow speed distribution of the fluid X that was determined, and thereby determines the flow volume of the fluid X flowing in the piping TB. The average flow volume computing unit 22b determines an average flow speed (see FIG. 3) by averaging the flow speed distribution of the fluid X that was determined, and integrates the cross-sectional area of the piping TB over this average flow speed, thereby determining a flow volume based on average flow speed of the fluid X flowing in the piping TB. Specifically, if V2 if the average flow speed of the fluid X that was determined, and r is the radius of the piping TB, the average flow volume computing unit 22b determines the average flow speed of the fluid X by calculating $V2 \times \pi r^2$. When the flow volume of the fluid X and the flow volume based on average flow speed are determined, the flow volume computing unit 22a outputs a flow volume signal S21 indicating the flow volume of the fluid X, and the average flow volume computing unit 22b outputs an average flow volume signal S21' indicating the flow volume based on average flow speed of the fluid X.

The air-bubble volume determining unit 23 includes a correlation value determining unit 23a (first determining unit) and a correlation value determining unit 23b (second determining unit), and determines the volume of the air-bubbles B contained in the fluid X flowing in the piping TB. The correlation value determining unit 23 a may hereinafter be referred to as a first determining unit. The correlation value determining unit 23b may hereinafter be referred to as a second determining unit. The correlation value determining unit 23a determines whether the correlation value obtained by the average flow speed computing unit 21a of the transmission method computing unit 21 exceeds a threshold set with consideration for the volume of the air-bubbles B contained in the fluid X (first threshold), and outputs a determination signal J1 indicating the determination result.

When measuring using transmission method, if the volume of the air-bubbles B contained in the fluid X becomes too large, the air-bubbles B obstruct the ultrasonic signal and measuring becomes impossible. Accordingly, the question of whether the volume of the air-bubbles B contained in the fluid X will allow measuring using transmission method is treated as a reference for setting the threshold. When the correlation value obtained by the average flow speed computing unit 21a has exceeded the threshold, measuring using transmission method is possible, and in that case the value of the determination signal J1 is '1'.

The correlation value determining unit 23b determines whether the correlation value obtained by the flow volume computing unit 22a exceeds a threshold set with consideration for the volume of the air-bubbles B contained in the fluid X (second threshold), and outputs a determination signal J2 indicating the determination result. While measuring using reflection method can be performed even if the fluid X contains a large volume of air-bubbles B, when the fluid X contains no air-bubbles B at all, no reflection signal can be obtained from air-bubbles B and measuring therefore becomes impossible. Accordingly, the question of whether the volume of the air-bubbles B contained in the fluid X will allow measuring using reflection method is treated as a reference for setting the threshold. When the correlation value obtained by the flow volume computing unit 22a exceeds the threshold, measuring using reflection method is possible, and in that case the value of the determination signal J2 is '1'.

The correction coefficient computing unit 24 includes a correction coefficient calculating unit 24a (first calculating unit) and a flow volume comparing unit 24b (second calculating unit), and calculates correction coefficients for correcting the flow volume signal S11 from the transmission method computing unit 21 and the flow volume signal S21 from the reflection method computing unit 22. The correction coefficient calculating unit 24a may hereinafter be referred to as a first calculating unit. The flow volume comparing unit 24b may hereinafter be referred to as a second calculating unit. The flow volume signals S11 and S21 are corrected to achieve highly precise measurements even under circumstances where, depending on the volume of the air-bubbles B contained in the fluid X, only measuring using transmission method is possible, or only measuring using reflection method is possible.

The correction coefficient calculating unit 24a calculates a correction coefficient Kr (first correction coefficient) based on the flow volume signal S21 from the reflection method computing unit 22 and the average flow volume signal S21' from the transmission method computing unit 21. This correction coefficient Kr is for correcting the flow volume signal S11 output from the transmission method computing unit 21 when measuring is possible using both transmission method and reflection method, or when measuring is only possible using transmission method. Specifically, if F21 is the flow volume of the fluid X indicated by the flow volume signal S21, and F21' is the flow volume based on average flow speed of the fluid X indicated by the average flow volume signal S21', the correction coefficient calculating unit 24a calculates the correction coefficient Kr by performing the following calculation:

$$Kr = F21 \,/\, F21' \qquad (1)$$

The flow volume comparing unit 24b compares the flow volume signal S12 from the correcting unit 26 (the signal obtained when the correcting unit 26 corrects the flow volume signal S11 from the transmission method computing unit 21) with the flow volume signal S21 from the reflection method computing unit 22, and calculates a correction coefficient Cr (second correction coefficient). This correction coefficient Cr is for correcting the flow volume signal S21 output from the reflection method computing unit 22 when measuring can only be performed using reflection method. Specifically, if F 12 is the flow volume of the fluid X indicated by the flow volume signal S12, and F21 is the flow volume of the fluid X indicated by the flow volume signal S21, the flow volume comparing unit 24b calculates the correction coefficient Cr by performing the following calculation:

$$Cr = F12 \,/\, F21 \qquad (2)$$

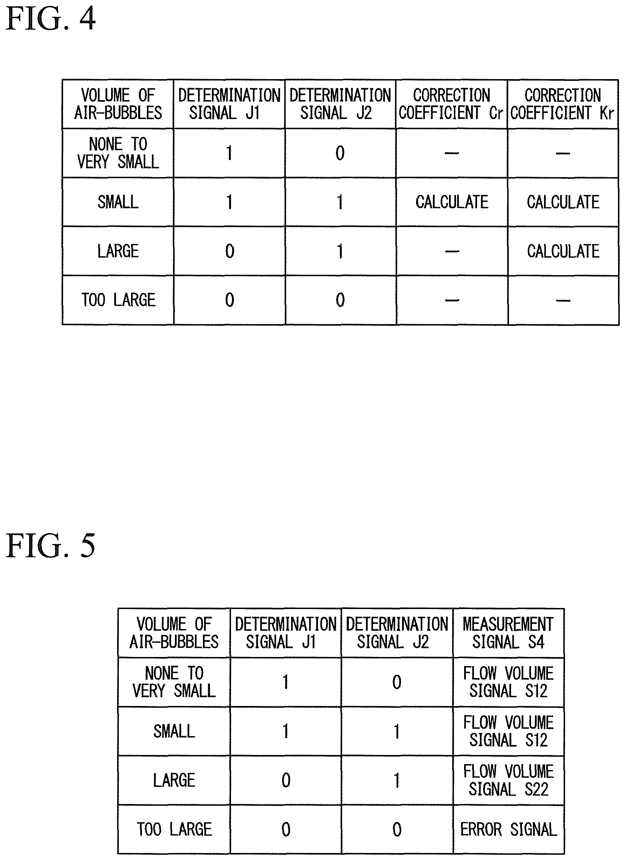

FIG. 4 is a diagram illustrating conditions for calculating a correction coefficient in the ultrasonic measuring device in accordance with the first preferred embodiment of the present invention. As shown in FIG. 4, the volume of air-bubbles B contained in the fluid X is classified as 'none to very small', 'small', 'large', or 'too large', depending on the determination signals J1 and J2 output from the air-bubble volume determining unit 23. When the volume of the air-bubbles B is 'none to very small', measuring can only be performed using transmission method. When the volume of the air-bubbles B is 'small', measuring can be performed using both transmission method and reflection method. When the volume of the air-bubbles B is 'large', measuring can only be performed using reflection method. When the volume of the air-bubbles B is 'too large', measuring cannot be performed using transmission or reflection method.

As shown in FIG. 4, the correction coefficient calculating unit 24a calculates the correction coefficient Kr when the determination signal J2 output from the air-bubble volume determining unit 23 has a value of '1' (when the volume of the air-bubbles B is 'small' or 'large'). The flow volume comparing unit 24b calculates the correction coefficient Cr when determination signals J1 and J2 output from the air-bubble volume determining unit 23 each have a value of '1' (when the volume of the air-bubbles B is 'small').

The correction coefficient storage unit 25 stores the correction coefficient Kr calculated by the correction coefficient calculating unit 24a of the correction coefficient computing unit 24 and the correction coefficient Cr calculated by the flow volume comparing unit 24b. The correction coefficient storage unit 25 stores the correction coefficients Kr and Cr in combination with the average flow speed determined by the average flow speed computing unit 21a of the transmission method computing unit 21 and the flow volume based on average flow speed determined by the average flow volume computing unit 22b of the reflection method computing unit 22. By storing them in correspondence in this manner, the correction coefficients Kr and Cr can be used over a wide range of flow speeds.

The correcting unit 26 includes flow volume correcting units 26a and 26b, and a flow volume output unit 26c. The correcting unit 26 uses correction coefficients Kr and Cr stored in the correction coefficient storage unit 25 to correct the flow volume signal S11 from the transmission method computing unit 21 and the flow volume signal S21 from the reflection method computing unit 22, and outputs one of the corrected flow volume signals S12 and S22 in accordance with the volume of the air-bubbles B contained in the fluid X. The flow volume correcting unit 26a uses the correction coefficient Kr stored in the correction coefficient storage unit 25 to correct the flow volume signal S11 from the transmission method computing unit 21, and outputs the corrected flow volume signal S 12 to the flow volume output unit 26c and the flow volume comparing unit 24b of the correction coefficient computing unit 24. The flow volume correcting unit 26b uses the correction coefficient Cr stored in the correction coefficient storage unit 25 to correct the flow volume signal S21 from the reflection method computing unit 22, and outputs the corrected flow volume signal S22 to the flow volume output unit 26c.

The flow volume output unit 26c inputs the flow volume signal S12 from the flow volume correcting unit 26a and the flow volume signal S22 from the flow volume correcting unit 26b, and outputs one of them as a measurement signal S4 in accordance with the determination signals J1 and J2 from the air-bubble volume determining unit 23. FIG. 5 is a diagram illustrating conditions for outputting a measurement signal in an ultrasonic measuring device in accordance with the first preferred embodiment of the present invention.

As shown in FIG. 5, when the determination signal J1 has a value of '1' (when the volume of the air-bubbles B is 'little to very small' or 'small'), the flow volume output unit 26c outputs the flow volume signal S12 as the measurement signal S4, and when the determination signal J1 has a value of '0' and the determination signal J2 has a value of '1' (when the volume of the air-bubbles B is 'large'), it outputs the flow volume signal S22 as the measurement signal S4. When the determination signals J1 and J2 both have values of '0', the flow volume output unit 26c outputs an error signal.

Subsequently, the operation of the ultrasonic measuring device 1 in the constitution described above will be explained. The operation of the ultrasonic measuring device 1 (mainly, the operation of the signal processing unit 18) differs according to the volume of the air-bubbles B contained in the fluid X flowing in the piping TB. Therefore, an operation when the volume of the air-bubbles B is 'small', an operation when the volume of the air-bubbles B is 'none to very small', and an operation when the volume of the air-bubbles B is 'large' will be explained in that order.

Operation when the volume of the air-bubbles B is 'small'

When measuring of the fluid X flowing in the piping TB starts, measuring is performed using the transmission and reflection methods alternately, under the control of the control unit 10. Incidentally, when the volume of the air-bubbles B is 'none to very small', and when it is 'large', measuring is performed using the transmission and reflection methods alternately, in the same manner as when the volume of the air-bubbles B is 'small'.

When measuring using the transmission method starts, a process is performed to obtain a receive signal S3 by sending and receiving an ultrasonic signal in the direction of the flow of the fluid X. Specifically, the control unit 10 outputs the switch signals C1 and C2, the send switch 12 is switched such that the sending circuit 13a becomes the output destination of the drive signal S0, and the receive switch 16 is switched such that the receive signal S2 from the receiving circuit 15b is output to the A/D converter 17. Thereafter, the control unit 10 outputs a trigger signal Tr to the drive signal generating circuit 11, which generates the drive signal S0.

The drive signal S0 generated by the drive signal generating circuit 11 is input via the send switch 12 and the sending circuit 13a to the transducer 14a, whereby the transducer 14a sends an ultrasonic signal to the fluid X. Of the ultrasonic signal that the transducer 14a sent to the fluid X, the ultrasonic signal that was transmitted through the fluid X and reached the transducer 14b (transmission signal) is received at the transducer 14b, which outputs a receive signal S2 in accordance with that transmission signal. The receive signal S2 is amplified by the receiving circuit 15b and then input via the receive switch 16 to the A/D converter 17, which converts it to a digital receive signal S3. This receive signal S3 is input to the signal processing unit 18, and stored in the average flow speed computing unit 21a of the transmission method computing unit 21.

A process is then performed to obtain a receive signal S3 when an ultrasonic signal is sent and received in an opposite direction to the flow of the fluid X. Specifically, the control unit 10 outputs the switch signals C1 and C2, the send switch 12 is switched such that the sending circuit 13b becomes the output destination of the drive signal S0, and the receive switch 16 is switched such that the receive signal S1 from the receiving circuit 15a is output to the A/D converter 17. Thereafter, the control unit 10 outputs a trigger signal Tr to the drive signal generating circuit 11, which generates the drive signal S0.

The drive signal S0 generated by the drive signal generating circuit 11 is input via the send switch 12 and the sending circuit 13b to the transducer 14b, whereby the transducer 14b sends an ultrasonic signal to the fluid X. Of the ultrasonic signal that the transducer 14a sends to the fluid X, the ultrasonic signal that is transmitted through the fluid X and reaches the transducer 14a (transmission signal) is received at the transducer 14a, which outputs a receive signal S1 in accordance with that transmission signal. The receive signal S1 is amplified by the receiving circuit 15a and then input via the receive switch 16 to the A/D converter 17, which converts it to a digital receive signal S3. This receive signal S3 is input to the signal processing unit 18, and stored in the average flow speed computing unit 21a of the transmission method computing unit 21.

When the above operation ends, the average flow speed computing unit 21a of the transmission method computing unit 21 performs a correlation operation to the receive signal S3 obtained when the ultrasonic signal was sent and received in the direction of the flow of the fluid X, and the receive signal S3 obtained when the ultrasonic signal was sent and received in an opposite direction to the flow of the fluid X, determining the average flow speed of the fluid X flowing in the piping TB. The flow volume computing unit 21b then multiplies the average flow speed thus determined by the cross-sectional area of the piping TB and determines the flow volume of the fluid X flowing in the piping TB, and the flow volume computing unit 21b outputs the flow volume signal S11.

The correlation value obtained by the correlation operation of the average flow speed computing unit 21a is input to the correlation value determining unit 23a of the air-bubble volume determining unit 23, and it is determined whether this correlation value exceeds the threshold set with consideration for the volume of the air-bubbles B contained in the fluid X. Since the case being considered here is one where the volume of the air-bubbles B is 'small', the correlation value determining unit 23a determines that the correlation value exceeds the threshold, and outputs a determination signal J1 with a value of '1' (see FIG. 4).

When measuring using the reflection method starts, a process is performed to obtain a receive signal S3 by receiving a reflection signal when an ultrasonic signal is sent in the direction of the flow of the fluid X. Specifically, the control unit 10 outputs the switch signals C1 and C2, the send switch 12 is switched such that the sending circuit 13a becomes the output destination of the drive signal S0, and the receive switch 16 is switched such that the receive signal S1 from the receiving circuit 15a is output to the A/D converter 17. Thereafter, the control unit 10 outputs a trigger signal Tr to the drive signal generating circuit 11, which generates the drive signal S0.

The drive signal S0 generated by the drive signal generating circuit 11 is input via the send switch 12 and the sending circuit 13a to the transducer 14a, whereby the transducer 14a sends an ultrasonic signal to the fluid X. Of the ultrasonic signal that the transducer 14a sends to the fluid X, the ultrasonic signal that is reflected by the air-bubbles B contained in the fluid X (reflection signal) is received at the transducer 14a, which outputs a receive signal S1 in accordance with that reflection signal. The receive signal S1 is amplified by the receiving circuit 15a and then input via the receive switch 16 to the A/D converter 17, which converts it to a digital receive signal S3. This receive signal S3 is input to the signal processing unit 18, and stored in the flow volume computing unit 22a and the average flow volume computing unit 22b of the reflection method computing unit 22.

A process is then performed to obtain a receive signal S3 by receiving a reflection signal when an ultrasonic signal is sent in the opposite direction to the flow of the fluid X. Specifically, the control unit 10 outputs the switch signals C1 and C2, the send switch 12 is switched such that the sending circuit 13b becomes the output destination of the drive signal S0, and the receive switch 16 is switched such that the receive signal S2 from the receiving circuit 15b is output to the A/D converter 17. Thereafter, the control unit 10 outputs a trigger signal Tr to the drive signal generating circuit 11, which generates the drive signal S0.

The drive signal S0 generated by the drive signal generating circuit 11 is input via the send switch 12 and the sending circuit 13b to the transducer 14b, whereby the transducer 14b sends an ultrasonic signal to the fluid X. Of the ultrasonic signal that the transducer 14b sends to the fluid X, the ultrasonic signal that is reflected by the air-bubbles B contained in the fluid X (reflection signal) is received at the transducer 14b, which outputs a receive signal S2 in accordance with that reflection signal. The receive signal S2 is amplified in the receiving circuit 15b and then input via the receive switch 16 to the A/D converter 17, which converts it to a digital receive signal S3. The receive signal S3 is input to the signal processing unit 18, and stored in the flow volume computing unit 22a and the average flow volume computing unit 22b of the reflection method computing unit 22.

When the operation described above is performed a predetermined number of times, the flow volume computing unit 22a and the average flow volume computing unit 22b each divide the plurality of stored receive signals S3 into a plurality of sections corresponding to their temporal positions, perform a correlation process to each divided section, and determine the flow speed distribution of the fluid X in the diameter direction of the piping TB. The flow volume computing unit 22a multiplies the flow speed distribution of the fluid X by the cross-sectional area of the piping TB (the cross-sectional area of the piping TB near each measurement point) and integrates the product, thereby determining the flow volume of the fluid X flowing in the piping TB, and the flow volume computing unit 22a then outputs the flow volume signal S21. The average flow volume computing unit 22b determines the average flow speed of the flow speed distribution of the fluid, multiplies the average flow speed by the cross-sectional area of the piping TB to determine a flow volume based on the average flow speed of the fluid X flowing in the piping TB, and outputs the average flow volume signal S21'.

Incidentally, the correlation value obtained by the correlation operation of the flow volume computing unit 22a is input to the correlation value determining unit 23b of the air-bubble volume determining unit 23, and it is determined whether it exceeds the threshold set with consideration for the volume of the air-bubbles B contained in the fluid X. Since the case being considered here is one where the volume of the air-bubbles B is 'small', the correlation value determining unit 23b determines that the correlation value exceeds the threshold and outputs a determination signal J2 with a value of '1' (see FIG. 4).

The flow volume signal S11 output from the transmission method computing unit 21 is input to the flow volume correcting unit 26a of the correcting unit 26. The flow volume signal S21 output from the reflection method computing unit 22 is input to the correction coefficient calculating unit 24a and the flow volume comparing unit 24b of the correction coefficient computing unit 24, and also to the flow volume correcting unit 26b of the correcting unit 26. The average flow volume signal S21' is input to the flow volume comparing unit 24b of the correction coefficient computing unit 24.

When the flow volume signal S21 and the average flow volume signal S21' from the reflection method computing unit 22 are input to the correction coefficient calculating unit 24a, a correction coefficient Kr is calculated using the equation (1) and stored in the correction coefficient storage unit 25 (see FIG. 4). The correction coefficient Kr is immediately read by the flow volume correcting unit 26a, and used in correcting the flow volume signal S11 from the transmission method computing unit 21. A flow volume signal S12 obtained by correcting the flow volume signal S11 with the correction coefficient Kr is output to the flow volume output unit 26c.

The flow volume signal S12 from the flow volume correcting unit 26a is output to the flow volume comparing unit 24b of the correction coefficient computing unit 24. When this flow volume signal S 12 and the flow volume signal S21 output from the reflection method computing unit 22 are input to the flow volume comparing unit 24b, a correction coefficient Cr is calculated using the equation (2) and stored in the correction coefficient storage unit 25 (see FIG. 4). This correction coefficient Cr is read by the flow volume correcting unit 26b and used in correcting the flow volume signal S21 from the reflection method computing unit 22. A flow volume signal S22 obtained by correcting the flow volume signal S21 with the correction coefficient Cr is output to the flow volume output unit 26c.

Thus the flow volume signal S12 from the flow volume correcting unit 26a and the flow volume signal S22 from the flow volume correcting unit 26b are input to the flow volume output unit 26c. As shown in FIG. 5, when the volume of the air-bubbles B is 'small', determination signals J1 and J2 with values of '1' are output from the air-bubble volume determining unit 23, and the flow volume output unit 26c therefore outputs the flow volume signal S12 from the flow volume correcting unit 26a (the signal obtained by using the correction coefficient Kr to correct the flow volume signal S11 determined by the transmission method computing unit 21) as the measurement signal S4.

Operation when the volume of air-bubbles B is 'none to very small'

As in the case when the volume of the air-bubbles B is 'small', measuring is performed using the transmission and reflection methods alternately, the transmission method computing unit 21 provided in the signal processing unit 18 outputs a flow volume signal S11 to the flow volume correcting unit 26a of the correcting unit 26, and the reflection method computing unit 22 outputs a flow volume signal S21 to the flow volume correcting unit 26b of the correcting unit 26. The flow volume signal S21 from the reflection method computing unit 22 is also input to the correction coefficient calculating unit 24a and the flow volume comparing unit 24b of the correction coefficient computing unit 24, and the average flow volume signal S21' is input to the flow volume comparing unit 24b of the correction coefficient computing unit 24.

Since the case being considered here is one where the volume of the air-bubbles B is 'none to very small', the correlation value determining unit 23a of the air-bubble volume determining unit 23 determines that the correlation value exceeds the threshold, whereas the correlation value determining unit 23b determines that it does not exceed the threshold. As shown in FIG. 4, the air-bubble volume determining unit 23 therefore outputs a determination signal J1 with a value of '1' and a determination signal J2 with a value of '0'.

When the determination signal J1 has a value of '1' and the determination signal J2 has a value of '0', the correction coefficient calculating unit 24a and the flow volume comparing unit 24b of the correction coefficient computing unit 24 do not calculate the correction coefficients Kr and Cr (see FIG. 4). Consequently, the correction coefficient Kr stored in the correction coefficient storage unit 25 is read by the flow volume correcting unit 26a and used in correcting the flow volume signal S11 from the transmission method computing unit 21.

The flow volume signal S 12 obtained when the flow volume correcting unit 26a used the correction coefficient Kr to correct the flow volume signal S 11 is output to the flow volume output unit 26c. As shown in FIG. 5, when the determination signal J1 has a value of '1' and the determination signal J2 has a value of '0', the flow volume signal S12 from the flow volume correcting unit 26a (the signal obtained by using the correction coefficient Kr to correct the flow volume signal S11 determined by the transmission method computing unit 21) is output as the measurement signal S4.

Operation when the volume of the air-bubbles B is 'large'

As in the case when the volume of the air-bubbles B is 'small', measuring is performed using the transmission and reflection methods alternately, the transmission method computing unit 21 provided in the signal processing unit 18 outputs a flow volume signal S11 to the flow volume correcting unit 26a of the correcting unit 26, and the reflection method computing unit 22 outputs a flow volume signal S21 to the flow volume correcting unit 26b of the correcting unit 26. The flow volume signal S21 from the reflection method computing unit 22 is also input to the correction coefficient calculating unit 24a and the flow volume comparing unit 24b of the correction coefficient computing unit 24, and the average flow volume signal S21' is input to the flow volume comparing unit 24b of the correction coefficient computing unit 24.

Since the case being considered here is one where the volume of the air-bubbles B is 'large', the correlation value determining unit 23a of the air-bubble volume determining unit 23 determines that the correlation value does not exceed the threshold, whereas the correlation value determining unit 23b determines that it exceeds the threshold. As shown in FIG. 4, the air-bubble volume determining unit 23 therefore outputs a determination signal J1 with a value of '0' and a determination signal J2 with a value of '1'.

When the determination signal J1 has a value of '0' and the determination signal J2 has a value of '1', the correction coefficient calculating unit 24a of the correction coefficient computing unit 24 calculates the correction coefficient Kr and stores it in the correction coefficient storage unit 25. The flow volume comparing unit 24b does not calculate the correction coefficient Cr (see FIG. 4). The correction coefficient Cr stored in the correction coefficient storage unit 25 is read by the flow volume correcting unit 26a and used in correcting the flow volume signal S21 from the transmission method computing unit 21.

The flow volume signal S22 obtained when the flow volume correcting unit 26b has used the correction coefficient Cr to correct the flow volume signal S21 is output to the flow volume output unit 26c. As shown in FIG. 5, when the determination signal J1 has a value of '0' and the determination signal J2 has a value of '1', the flow volume signal S22 from the flow volume correcting unit 26b (the signal obtained by using the correction coefficient Cr to correct the flow volume signal S21 determined by the reflection method computing unit 22) is then output as the measurement signal S4.

As described above, in the preferred embodiment, the flow volume of the fluid X is determined using each of the transmission method and the reflection method, and at least one of a flow volume obtained by using the correction coefficient Kr to correct the flow volume determined using the transmission method and a flow volume obtained by using the correction coefficient Cr to correct the flow volume determined using the reflection method is output in accordance with the volume of the air-bubbles B contained in the fluid X. This makes it possible to measure with high precision, irrespective of the volume of the air-bubbles B contained in the fluid X. For example, when measuring using only the reflection method, even if there are adverse factors such as the oscillation state of the ultrasonic waves, resonance with the piping, and reverberation near the wall of the piping, and such like, by using the correction coefficient Cr to correct flow volume, high-precision measuring can be achieved.

While the ultrasonic measuring device 1 in accordance with the preferred embodiment of the present invention has been described above, the invention is not limited to the preferred embodiment described above and can be freely modified within the scope of the invention. For example, to simplify the explanation of the preferred embodiment described above, the example is one where the volume of the air-bubbles B contained in the fluid X when the ultrasonic measuring device 1 starts operating is 'small'. However, to achieve precise measuring even if the volume of the air-bubbles B when the ultrasonic measuring device 1 starts operating is 'small' or 'none to very small', predetermined fixed values can be used as initial values for the correction coefficients Kr and Cr and stored in the correction coefficient storage unit 25.

In the preferred embodiment described above, the example is one where the correction coefficient Cr is calculated by comparing the flow volume determined by the transmission method computing unit 21 (more accurately, the flow volume corrected by the flow volume correcting unit 26a of the correcting unit 26) with the flow volume determined by the reflection method computing unit 22. However, the correction coefficient Cr can also be determined by comparing the average flow speed determined by the transmission method computing unit 21 with the average flow speed determined by the reflection method computing unit 22.

In the preferred embodiment described above, the example is one where the air-bubble volume determining unit 23 determines the volume of the air-bubbles using a correlation value determined by the transmission method computing unit 21 and a correlation value determined by the reflection method computing unit 22. However, instead of using correlation values, the air-bubble volume determining unit 23 can determined the volume of the air-bubbles based on the amplitude of the receive signal S3.

The present invention provides an ultrasonic measuring device that can perform highly precise measuring, irrespective of the volume of air-bubbles contained in the fluid.

According to the invention, the ultrasonic measuring device determines a first flow volume indicating the flow volume of a fluid from a first receive signal obtained by receiving a transmission signal, determines a second flow volume indicating the flow volume of the fluid from a second receive signal obtained by receiving a reflection signal, and, in accordance with the volume of the air-bubbles contained in the fluid, outputs one of the first flow volume, corrected using a first correction coefficient stored in a storage unit, and the second flow volume, corrected using a second correction coefficient.

As used herein, the following directional terms "forward, rearward, above, downward, right, left, vertical, horizontal, below, transverse, row and column" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

## Claims

1. An ultrasonic measuring device (1), comprising:

   a first transducer (14a) configured to send a first ultrasonic signal to a fluid and to receive a first reflection signal that is the first ultrasonic signal reflected by air-bubbles contained in the fluid, the first transducer (14a) receiving a second transmission signal that is a second ultrasonic signal transmitted through the fluid;
   a second transducer (14b) configured to send the second ultrasonic signal to the fluid and to receive a second reflection signal that is the second ultrasonic signal reflected by air-bubbles contained in the fluid, the second transducer (14b) receiving a first transmission signal that is the first ultrasonic signal transmitted through the fluid, the second transducer (14b) being attached downstream in a direction the fluid is flowing in from the first transducer (14a);
   a first computing unit (21) configured to perform a correlation calculation of a receive signal obtained when an ultrasonic signal was sent and received in a direction of a flow of the fluid, and a receive signal obtained when the ultrasonic signal was sent and received in an opposite direction to the flow of the fluid, and to acquire a first correlation value to determine a first flow volume indicating the flow volume of the fluid;
   a second computing unit (22) configured to perform a correlation calculation of a plurality of receive signals obtained by receiving a plurality of reflection signals obtained when the ultrasonic signal was sent through the fluid at predetermined intervals of time, and to acquire a second correlation value to determine a second flow volume indicating the flow volume of the fluid;
   a first determining unit (23a) configured to determine whether or not the first correlation value exceeds a first threshold that is set with consideration for the volume of air-bubbles contained in the fluid;
   a second determining unit (23b) configured to determine whether or not the second correlation value exceeds a second threshold that is set with consideration for the volume of air-bubbles contained in the fluid;
   a storage unit (25) configured to store a first correction coefficient, which is used in correcting the first flow volume, and a second correction coefficient, which is used in correcting the second flow volume; and
   a correcting unit (26) configured to output the first flow volume that has been corrected by using the first correction coefficient if the first determining unit (23a) determines that the first correlation value exceeds the first threshold, and to output the second flow volume that has been corrected by using the second correction coefficient if the first determining unit (23a) determines that the first correlation value does not exceed the first threshold and the second determining unit (23b) determines that the second correlation value exceeds the second threshold.

2. The ultrasonic measuring device (1) according to claim 1, further comprising:

   a first calculating unit (24a) configured to calculate the first correction coefficient if the second determining unit (23b) determines that the second correlation value exceeds the second threshold; and
   a second calculating unit (24b) configured to calculate the second correction coefficient if the first determining unit (23a) determines that the first correlation value exceeds the first threshold and the second determining unit determines that the second correlation value exceeds the second threshold.

3. The ultrasonic measuring device (1) according to claim 1, wherein

   the first correction coefficient indicates a ratio between the flow volume of the fluid determined from the second receive signal and a flow volume based on an average flow speed, and
   the second correction coefficient indicates a ratio between the first flow volume corrected by using the first correction coefficient and the flow volume of the fluid determined from the second receive signal.

4. The ultrasonic measuring device (1) according to claim 1, wherein
   the first computing unit (21) includes an average flow speed computing unit (21a) and a flow volume computing unit (21b), and
   the average flow speed computing unit (21a) is configured to perform a correlation operation of a receive signal, which is obtained when the ultrasonic signal was sent and received in a direction of a flow of the fluid, and a receive signal, which is obtained when the ultrasonic signal was sent and received in an opposite direction to the flow of the fluid, and to determine an average speed of the fluid flowing in a piping by determining a time difference when a correlation value reaches its maximum.

5. The ultrasonic measuring device (1) according to claim 4, wherein
   the flow volume computing unit (21b) determines the flow volume of the fluid by calculating $v1 \times \pi r^2$, where V1 is the average speed of the fluid determined by the average flow speed computing unit (21a) and r is a cross-sectional area of the piping.

6. The ultrasonic measuring device (1) according to claim 1, wherein
   the second computing unit (22) includes a flow volume computing unit (22a) and an average flow volume computing unit (22b),
   the flow volume computing unit (22a) determines a flow speed distribution of the fluid by performing a correlation calculation using a plurality of receive signals obtained when the ultrasonic signal was sent through the fluid at predetermined intervals of time, and uses the flow speed distribution to determine the second flow volume that is the flow volume of the fluid flowing in a piping, and
   the average flow volume computing unit (22b) determines the flow speed distribution of the fluid by performing the correlation calculation using the plurality of receive signals obtained when the ultrasonic signal was sent through the fluid at predetermined intervals of time, and uses an average speed obtained by averaging the flow speed distribution to determine the flow volume based on an average flow speed of the fluid flowing in the piping.

7. The ultrasonic measuring device (1) according to claim 6, wherein
   the flow volume computing unit (22a) and the average flow volume computing unit (22b) divide the plurality of receive signals, which are obtained by sending the ultrasonic signal through the fluid, a plurality of times into a plurality of sections corresponding to their temporal positions, and perform a correlation process to each section, and
   a time interval with a maximum correlation is determined for every section, and the flow speed of the fluid in every section is determined from each time interval, whereby the flow speed distribution of the fluid in a diameter direction of the piping is determined.

8. The ultrasonic measuring device (1) according to claim 2, wherein
   the first calculating unit (24a) calculates the first correction coefficient Kr by performing a following calculation:

$$Kr = F21 / F21' \qquad (1)$$

where F21 is the second flow volume calculated by the second computing unit (22) and received from the second computing unit, and F21' is the flow volume based on an average flow speed of the fluid calculated by the second computing unit and received from the second computing unit.

9. The ultrasonic measuring device (1) according to claim 2, wherein
the second calculating unit (24b) calculates the second correction coefficient Cr by performing a following calculation:

$$Cr = F12 / F21 \qquad (2)$$

where F12 is the first flow volume corrected by the correcting unit (26) and received from the correcting unit, and F21 is the second flow volume calculated by the second computing unit (22) and received from the second computing unit.

10. An ultrasonic measuring method, comprising:

sending, by a first transducer (14a), a first ultrasonic signal to a fluid and receiving a first reflection signal that is the first ultrasonic signal reflected by air-bubbles contained in the fluid;
sending, by a second transducer (14b) attached downstream in a direction the fluid is flowing in from the first transducer (14a), a second ultrasonic signal to the fluid and to receive a second reflection signal that is the second ultrasonic signal reflected by air-bubbles contained in the fluid;
receiving, by the first transducer (14a), a second transmission signal that is the second ultrasonic signal transmitted through the fluid;
receiving, by the second transducer (14b), a first transmission signal that is the first ultrasonic signal transmitted through the fluid;
performing a correlation calculation of a receive signal obtained when an ultrasonic signal was sent and received in a direction of a flow of the fluid, and a receive signal obtained when the ultrasonic signal was sent and received in an opposite direction to the flow of the fluid, and to acquire a first correlation value to determine a first flow volume indicating the flow volume of the fluid;
performing a correlation calculation of a plurality of receive signals obtained by receiving a plurality of reflection signals obtained when the ultrasonic signal was sent through the fluid at predetermined intervals of time, and to acquire a second correlation value to determine a second flow volume indicating the flow volume of the fluid;
determining whether or not the first correlation value exceeds a first threshold that is set with consideration for the volume of air-bubbles contained in the fluid;
determining whether or not the second correlation value exceeds a second threshold that is set with consideration for the volume of air-bubbles contained in the fluid;
storing a first correction coefficient, which is used in correcting the first flow volume, and a second correction coefficient, which is used in correcting the second flow volume; and
outputting the first flow volume that has been corrected by using the first correction coefficient if it is determined that the first correlation value exceeds the first threshold, and outputting the second flow volume that has been corrected by using the second correction coefficient if it is determined that the first correlation value does not exceed the first threshold and it is determined that the second correlation value exceeds the second threshold.

11. The ultrasonic measuring method according to claim 10, further comprising:

determining the volume of air-bubbles contained in the fluid by using the first correlation value and the second correlation value.

**Patentansprüche**

1. Ultraschallmessvorrichtung (1), aufweisend:

einen ersten Signalumwandler (14a), der konfiguriert ist, um ein erstes Ultraschallsignal zu einem Fluid zu senden und ein erstes Reflexionssignal, das das durch in dem Fluid enthaltene Luftblasen reflektierte erste Ultraschallsignal ist, zu empfangen, wobei der erste Signalumwandler (14a) ein zweites Übertragungssignal, das ein durch das Fluid übertragenes zweites Ultraschallsignal ist, empfängt;

einen zweiten Signalumwandler (14b), der konfiguriert ist, um das zweite Ultraschallsignal an das Fluid zu senden und ein zweites Reflexionssignal, das das durch in dem Fluid enthaltene Luftblasen reflektierte zweite Ultraschallsignal ist, zu empfangen, wobei der zweite Signalumwandler (14b) ein erstes Übertragungssignal, das das durch das Fluid übertragene erste Ultraschallsignal ist, empfängt, wobei der zweite Signalumwandler (14b) stromabwärts in einer Richtung angebracht ist, in der das Fluid von dem ersten Signalumwandler (14a) strömt;

eine erste Berechnungseinheit (21), die konfiguriert ist, um eine Korrelationsberechnung eines Empfangssignals, das erhalten wird, wenn ein Ultraschallsignal in einer Richtung einer Strömung des Fluids gesendet und empfangen worden ist, und eines Empfangssignals, das erhalten wird, wenn das Ultraschallsignal in einer der Strömung des Fluids entgegengesetzten Richtung gesendet und empfangen worden ist, durchzuführen, und um einen ersten Korrelationswert zu akquirieren, um ein erstes Strömungsvolumen, das das Strömungsvolumen des Fluids anzeigt, zu bestimmen;

eine zweite Berechnungseinheit (22), die konfiguriert ist, um eine Korrelationsberechnung einer Vielzahl von Empfangssignalen durchzuführen, die durch Empfangen einer Vielzahl von Reflexionssignalen erhalten sind, die erhalten werden, wenn das Ultraschallsignal durch das Fluid zu vorbestimmten Zeitintervallen gesendet worden ist, und um einen zweiten Korrelationswert zu akquirieren, um ein zweites Strömungsvolumen, das das Strömungsvolumen des Fluids anzeigt, zu bestimmen;

eine erste Bestimmungseinheit (23a), die konfiguriert ist, um zu bestimmen, ob der erste Korrelationswert einen ersten Schwellenwert, der unter Berücksichtigung des Volumens der in dem Fluid enthaltenen Luftblasen eingestellt ist, übersteigt oder nicht;

eine zweite Bestimmungseinheit (23b), die konfiguriert ist, um zu bestimmen, ob der zweite Korrelationswert einen zweiten Schwellenwert, der unter Berücksichtigung des Volumens der in dem Fluid enthaltenen Luftblasen eingestellt ist, übersteigt oder nicht;

eine Speichereinheit (25), die konfiguriert ist, um einen ersten Korrekturkoeffizienten, welcher zum Korrigieren des ersten Strömungsvolumens verwendet wird, sowie einen zweiten Korrekturkoeffizienten, welcher zum Korrigieren des zweiten Strömungsvolumens verwendet wird, zu speichern; und

eine Korrektureinheit (26), die konfiguriert ist, um das erste Strömungsvolumen, das unter Verwendung des ersten Korrekturkoeffizienten korrigiert worden ist, auszugeben, falls die erste Bestimmungseinheit (23a) bestimmt, dass der erste Korrelationswert den ersten Schwellenwert übersteigt, und um das zweite Strömungsvolumen, das unter Verwendung des zweiten Korrekturkoeffizienten korrigiert worden ist, auszugeben, falls die erste Bestimmungseinheit (23a) bestimmt, dass der erste Korrelationswert den ersten Schwellenwert nicht übersteigt, und die zweite Bestimmungseinheit (23b) bestimmt, dass der zweite Korrelationswert den zweiten Schwellenwert übersteigt.

2. Ultraschallmessvorrichtung (1) nach Anspruch 1, ferner aufweisend:

eine erste Berechnungseinheit (24a), die konfiguriert ist, um den ersten Korrekturkoeffizienten zu berechnen, falls die zweite Bestimmungseinheit (23b) bestimmt, dass der zweite Korrelationswert den zweiten Schwellenwert übersteigt, und

eine zweite Berechnungseinheit (24b), die konfiguriert ist, um den zweiten Korrekturkoeffizienten zu berechnen, falls die erste Bestimmungseinheit (23a) bestimmt, dass der erste Korrelationswert den ersten Schwellenwert übersteigt, und die zweite Bestimmungseinheit bestimmt, dass der zweite Korrelationswert den zweiten Schwellenwert übersteigt.

3. Ultraschallmessvorrichtung (1) nach Anspruch 1, wobei
der erste Korrekturkoeffizient ein Verhältnis zwischen dem Strömungsvolumen des Fluids, das von dem zweiten Empfangssignal bestimmt ist, und einem Strömungsvolumen basierend auf einer mittleren Strömungsgeschwindigkeit anzeigt, und
der zweite Korrekturkoeffizient ein Verhältnis zwischen dem ersten Strömungsvolumen, das unter Verwendung des ersten Korrekturkoeffizienten korrigiert ist, und dem Strömungsvolumen des Fluids, das aus dem zweiten Empfangssignal bestimmt ist, anzeigt.

4. Ultraschallmessvorrichtung (1) nach Anspruch 1, wobei
die erste Berechnungseinheit (21) eine Mittlere-Strömungsgeschwindigkeit-Berechnungseinheit (21a) und eine Strömungsvolumen-Berechnungseinheit (21b) umfasst, und

die Mittlere-Strömungsgeschwindigkeit-Berechnungseinheit (21a) konfiguriert ist, um eine Korrelationsoperation eines Empfangssignals, welches erhalten wird, wenn das Ultraschallsignal in einer Richtung einer Strömung des Fluids gesendet und empfangen worden ist, und eines Empfangssignals, welches erhalten wird, wenn das Ultraschallsignal in einer der Strömung des Fluids entgegengesetzten Richtung gesendet und empfangen worden ist, durchzuführen, und um eine mittlere Geschwindigkeit des in einer Leitung strömenden Fluids zu bestimmen, indem eine Zeitdifferenz bestimmt wird, wenn ein Korrelationswert sein Maximum erreicht.

5. Ultraschallmessvorrichtung (1) nach Anspruch 4, wobei
die Strömungsvolumen-Berechnungseinheit (21b) das Strömungsvolumen des Fluids bestimmt, indem $V1 \times \pi r^2$ berechnet wird, wobei V1 die durch die Mittlere-Strömungsgeschwindigkeit-Berechnungseinheit (21a) bestimmte mittlere Geschwindigkeit des Fluids darstellt, und r ein Querschnittsgebiet der Leitung darstellt.

6. Ultraschallmessvorrichtung (1) nach Anspruch 1, wobei
die zweite Berechnungseinheit (22) eine Strömungsvolumen-Berechnungseinheit (22a) und eine Mittlere-Strömungsvolumen-Berechnungseinheit (22b) umfasst,
die Strömungsvolumen-Berechnungseinheit (22a) eine Strömungsgeschwindigkeitsverteilung des Fluids bestimmt, indem eine Korrelationsberechnung unter Verwendung einer Vielzahl von Empfangssignalen, die erhalten werden, wenn das Ultraschallsignal durch das Fluid zu vorbestimmten Zeitintervallen gesendet worden ist, durchführt, und die Strömungsgeschwindigkeitsverteilung verwendet, um das zweite Strömungsvolumen, das das Strömungsvolumen des in einer Leitung strömenden Fluids ist, zu bestimmen, und
die Mittlere-Strömungsvolumen-Berechnungseinheit (22b) die Strömungsgeschwindigkeitsverteilung des Fluids bestimmt, indem die Korrelationsberechnung unter Verwendung der Vielzahl von Empfangssignalen, die erhalten werden, wenn das Ultraschallsignal durch das Fluid zu vorbestimmten Zeitintervallen gesendet worden ist, durchgeführt wird, und eine mittlere Geschwindigkeit, die durch Mitteln der Strömungsgeschwindigkeitsverteilung erhalten wird, verwendet, um das Strömungsvolumen basierend auf einer mittleren Strömungsgeschwindigkeit des in der Leitung strömenden Fluids zu bestimmen.

7. Ultraschallmessvorrichtung (1) nach Anspruch 6, wobei
die Strömungsvolumen-Berechnungseinheit (22a) und die Mittlere-Strömungsvolumen-Berechnungseinheit (22b) die Vielzahl von Empfangssignalen, welche durch Senden des Ultraschallsignals durch das Fluid erhalten sind, mehrfach in eine Vielzahl von Abschnitten korrespondierend zu ihren zeitlichen Positionen aufteilen, und einen Korrelationsprozess bezüglich jedes Abschnitts durchführen, und
ein Zeitintervall mit einer maximalen Korrelation für jeden Abschnitt bestimmt wird, und die Strömungsgeschwindigkeit des Fluids in jedem Abschnitt aus jedem Zeitintervall bestimmt wird, wodurch die Strömungsgeschwindigkeitsverteilung des Fluids in einer Durchmesserrichtung der Leitung bestimmt wird.

8. Ultraschallmessvorrichtung (1) nach Anspruch 2, wobei
die erste Berechnungseinheit (24a) den ersten Korrekturkoeffizienten Kr berechnet, indem eine folgende Berechnung durchgeführt wird:

$$Kr = F21 / F21´ \quad (1)$$

wobei F21 das zweite Strömungsvolumen, das durch die zweite Berechnungseinheit (22) berechnet und von der zweiten Berechnungseinheit empfangen ist, darstellt, und F21' das Strömungsvolumen basierend auf einer mittleren Strömungsgeschwindigkeit des Fluids, die durch die zweite Berechnungseinheit berechnet und von der zweiten Berechnungseinheit empfangen ist, darstellt.

9. Ultraschallmessvorrichtung (1) nach Anspruch 2, wobei
die zweite Berechnungseinheit (24b) den zweiten Korrekturkoeffizienten Cr berechnet, indem eine folgende Berechnung durchgeführt wird:

$$Cr = F12 / F21 \quad (2)$$

wobei F12 das erste Strömungsvolumen, das durch die Korrektureinheit (26) korrigiert und von der Korrektureinheit empfangen ist, darstellt, und F21 das zweite Strömungsvolumen, das durch die zweite Berechnungseinheit (22) berechnet und von der zweiten Berechnungseinheit empfangen ist, darstellt.

10. Ultraschallmessverfahren, aufweisend:

Senden, durch einen ersten Signalumwandler (14a), eines ersten Ultraschallsignals zu einem Fluid, und Empfangen eines ersten Reflexionssignals, das das durch in dem Fluid enthaltene Luftblasen reflektierte erste Ultraschallsignal ist;

Senden, durch einen zweiten Signalumwandler (14b), der stromabwärts in einer Richtung angebracht ist, in welcher das Fluid von dem ersten Signalumwandler (14a) strömt, eines zweiten Ultraschallsignals zu dem Fluid, und Empfangen eines zweiten Reflexionssignals, das das durch in dem Fluid enthaltene Luftblasen reflektierte zweite Ultraschallsignal ist;

Empfangen, durch den ersten Signalumwandler (14a), eines zweiten Übertragungssignals, das das durch das Fluid übertragene zweite Ultraschallsignal ist;

Empfangen, durch den zweiten Signalumwandler (14b), eines ersten Übertragungssignals, das das durch das Fluid übertragene erste Ultraschallsignal ist;

Durchführen einer Korrelationsberechnung eines Empfangssignals, das erhalten wird, wenn ein Ultraschallsignal in einer Richtung einer Strömung des Fluids gesendet und empfangen worden ist, und eines Empfangssignals, das erhalten wird, wenn das Ultraschallsignal in einer der Strömung des Fluid entgegengesetzten Richtung gesendet und empfangen worden ist, und Akquirieren eines ersten Korrelationswerts, um ein erstes Strömungsvolumen, das das Strömungsvolumen des Fluids anzeigt, zu bestimmen;

Durchführen einer Korrelationsberechnung einer Vielzahl von Empfangssignalen, die durch Empfangen einer Vielzahl von Reflexionssignalen erhalten werden, die erhalten werden, wenn das Ultraschallsignal durch das Fluid zu vorbestimmten Zeitintervallen gesendet worden ist, und Akquirieren eines zweiten Korrelationswerts, um ein zweites Strömungsvolumen, das das Strömungsvolumen des Fluids anzeigt, zu bestimmen;

Bestimmen, ob der erste Korrelationswert einen ersten Schwellenwert, der unter Berücksichtigung des Volumens der in dem Fluid enthaltenen Luftblasen eingestellt ist, übersteigt oder nicht;

Bestimmen, ob der zweite Korrelationswert einen zweiten Schwellenwert, der unter Berücksichtigung des Volumens der in dem Fluid enthaltenen Luftblasen eingestellt ist, übersteigt oder nicht;

Speichern eines ersten Korrekturkoeffizienten, welcher zum Korrigieren des ersten Strömungsvolumens verwendet wird, und eines zweiten Korrekturkoeffizienten, welcher zum Korrigieren des zweiten Strömungsvolumens verwendet wird; und

Ausgeben des ersten Strömungsvolumens, das unter Verwendung des ersten Korrekturkoeffizienten korrigiert worden ist, falls bestimmt wird, dass der erste Korrelationswert den ersten Schwellenwert übersteigt, und Ausgeben des zweiten Strömungsvolumens, das unter Verwendung des zweiten Korrekturkoeffizienten korrigiert worden ist, falls bestimmt wird, dass der erste Korrelationswert den ersten Schwellenwert nicht übersteigt, und bestimmt wird, dass der zweite Korrelationswert den zweiten Schwellenwert übersteigt.

11. Ultraschallmessverfahren nach Anspruch 10, ferner aufweisend:

Bestimmen des Volumens der in dem Fluid enthaltenen Luftblasen unter Verwendung des ersten Korrelationswerts und des zweiten Korrelationswerts.

## Revendications

1. Dispositif de mesure ultrasonore (1), comprenant :

un premier transducteur (14a) configuré pour envoyer un premier signal ultrasonore à un fluide et pour recevoir un premier signal de réflexion qui est le premier signal ultrasonore réfléchi par des bulles d'air contenues dans le fluide, le premier transducteur (14a) recevant un second signal de transmission qui est un second signal ultrasonore transmis à travers le fluide ;

un second transducteur (14b) configuré pour envoyer le second signal ultrasonore au fluide et pour recevoir un second signal de réflexion qui est le second signal ultrasonore réfléchi par des bulles d'air contenues dans le fluide, le second transducteur (14b) recevant un premier signal de transmission qui est le premier signal ultrasonore transmis à travers le fluide, le second transducteur (14b) étant attaché en aval dans une direction dans laquelle le fluide s'écoule depuis le premier transducteur (14a) ;

une première unité de calcul informatique (21) configurée pour réaliser un calcul de corrélation d'un signal de réception obtenu lorsqu'un signal ultrasonore a été envoyé et reçu dans une direction d'un écoulement du fluide, et un signal de réception obtenu lorsque le signal ultrasonore a été envoyé et reçu dans une direction opposée à l'écoulement du fluide, et pour acquérir une première valeur de corrélation pour déterminer un premier volume d'écoulement indiquant le volume d'écoulement du fluide ;

une seconde unité de calcul informatique (22) configurée pour réaliser un calcul de corrélation d'une pluralité de signaux de réception obtenus en recevant une pluralité de signaux de réflexion obtenus lorsque le signal ultrasonore a été envoyé à travers le fluide à des intervalles de temps prédéterminés, et pour acquérir une seconde valeur de corrélation pour déterminer un second volume d'écoulement indiquant le volume d'écoulement du fluide ;

une première unité de détermination (23a) configurée pour déterminer si la première valeur de corrélation dépasse ou non un premier seuil qui est fixé en considération du volume de bulles d'air contenues dans le fluide ;

une seconde unité de détermination (23b) configurée pour déterminer si la seconde valeur de corrélation dépasse ou non un second seuil qui est fixé en considération du volume de bulles d'air contenues dans le fluide ;

une unité de stockage (25) configurée pour stocker un premier coefficient de correction, qui est utilisé dans la correction du premier volume d'écoulement, et un second coefficient de correction, qui est utilisé dans la correction du second volume d'écoulement ; et

une unité de correction (26) configurée pour fournir en sortie le premier volume d'écoulement qui a été corrigé en utilisant le premier coefficient de correction si la première unité de détermination (23a) détermine que la première valeur de corrélation dépasse le premier seuil, et pour fournir en sortie le second volume d'écoulement qui a été corrigé en utilisant le second coefficient de correction si la première unité de détermination (23a) détermine que la première valeur de corrélation ne dépasse pas le premier seuil et la seconde unité de détermination (23b) détermine que la seconde valeur de corrélation dépasse le second seuil.

2. Dispositif de mesure ultrasonore (1) selon la revendication 1, comprenant en outre :

une première unité de calcul (24a) configurée pour calculer le premier coefficient de correction si la seconde unité de détermination (23b) détermine que la seconde valeur de corrélation dépasse le second seuil ; et

une seconde unité de calcul (24b) configurée pour calculer le second coefficient de correction si la première unité de détermination (23a) détermine que la première valeur de corrélation dépasse le premier seuil et que la seconde unité de détermination détermine que la seconde valeur de corrélation dépasse le second seuil.

3. Dispositif de mesure ultrasonore (1) selon la revendication 1, dans lequel

le premier coefficient de correction indique un rapport entre le volume d'écoulement du fluide déterminé à partir du second signal de réception et un volume d'écoulement sur la base d'une vitesse d'écoulement moyenne, et le second coefficient de correction indique un rapport entre le premier volume d'écoulement corrigé en utilisant le premier coefficient de correction et le volume d'écoulement du fluide déterminé à partir du second signal de réception.

4. Dispositif de mesure ultrasonore (1) selon la revendication 1, dans lequel

la première unité de calcul informatique (21) inclut une unité de calcul informatique de vitesse d'écoulement moyenne (21a) et une unité de calcul informatique de volume d'écoulement (21b), et

l'unité de calcul informatique de vitesse d'écoulement moyenne (21a) est configurée pour réaliser une opération de corrélation d'un signal de réception, qui est obtenu lorsque le signal ultrasonore a été envoyé et reçu dans une direction d'un écoulement du fluide, et d'un signal de réception, qui est obtenu lorsque le signal ultrasonore a été envoyé et reçu dans une direction opposée à l'écoulement du fluide, et pour déterminer une vitesse moyenne du fluide s'écoulant dans une tuyauterie en déterminant une différence de temps lorsqu'une valeur de corrélation atteint son maximum.

5. Dispositif de mesure ultrasonore (1) selon la revendication 4, dans lequel

l'unité de calcul informatique de volume d'écoulement (21b) détermine le volume d'écoulement du fluide en calculant $V1 \times \pi r^2$, où V1 est la vitesse moyenne du fluide déterminée par l'unité de calcul informatique de vitesse d'écoulement moyenne (21a) et r est une aire en coupe de la tuyauterie.

6. Dispositif de mesure ultrasonore (1) selon la revendication 1, dans lequel

la seconde unité de calcul informatique (22) inclut une unité de calcul informatique de volume d'écoulement (22a) et une unité de calcul informatique de volume d'écoulement moyen (22b),

l'unité de calcul informatique de volume d'écoulement (22a) détermine une distribution de vitesse d'écoulement du fluide en réalisant un calcul de corrélation utilisant une pluralité de signaux de réception obtenus lorsque le signal ultrasonore a été envoyé à travers le fluide à des intervalles de temps prédéterminés, et utilise la distribution de vitesse d'écoulement pour déterminer le second volume d'écoulement qui est le volume d'écoulement du fluide s'écoulant dans une tuyauterie, et

l'unité de calcul informatique de volume d'écoulement moyen (22b) détermine la distribution de vitesse d'écoulement du fluide en réalisant le calcul de corrélation utilisant la pluralité de signaux de réception obtenus lorsque le signal ultrasonore a été envoyé à travers le fluide à des intervalles de temps prédéterminés, et utilise une vitesse moyenne obtenue en moyennant la distribution de vitesse d'écoulement pour déterminer le volume d'écoulement sur la base d'une vitesse d'écoulement moyenne du fluide s'écoulant dans la tuyauterie.

**7.** Dispositif de mesure ultrasonore (1) selon la revendication 6, dans lequel

l'unité de calcul informatique de volume d'écoulement (22a) et l'unité de calcul informatique de volume d'écoulement moyen (22b) divisent la pluralité de signaux de réception, qui sont obtenus en envoyant le signal ultrasonore à travers le fluide, une pluralité de fois en une pluralité de sections correspondant à leurs positions temporelles, et réalisent un processus de corrélation sur chaque section, et

un intervalle de temps avec une corrélation maximale est déterminé pour chaque section, et la vitesse d'écoulement du fluide dans chaque section est déterminée à partir de chaque intervalle de temps, moyennant quoi la distribution de vitesse d'écoulement du fluide dans une direction de diamètre de la tuyauterie est déterminée.

**8.** Dispositif de mesure ultrasonore (1) selon la revendication 2, dans lequel

la première unité de calcul (24a) calcule le premier coefficient de correction Kr en réalisant un calcul suivait :

$$Kr = F21/F21' \tag{1}$$

où F21 est le second volume d'écoulement calculé par la seconde unité de calcul informatique (22) et reçu depuis la seconde unité de calcul informatique, et F21' est le volume d'écoulement sur la base d'une vitesse d'écoulement moyenne du fluide calculée par la seconde unité de calcul informatique et reçu depuis la seconde unité de calcul informatique.

**9.** Dispositif de mesure ultrasonore (1) selon la revendication 2, dans lequel

la seconde unité de calcul (24b) calcule le second coefficient de correction Cr en réalisant un calcul suivant :

$$Cr = F12/F21 \tag{2}$$

où F12 est le premier volume d'écoulement corrigé par l'unité de correction (26) et reçu depuis l'unité de correction, et F21 est le second volume d'écoulement calculé par la seconde unité de calcul informatique (22) et reçu depuis la seconde unité de calcul informatique.

**10.** Procédé de mesure ultrasonore, comprenant :

l'envoi, par un premier transducteur (14a), d'un premier signal ultrasonore à un fluide et la réception d'un premier signal de réflexion qui est le premier signal ultrasonore réfléchi par des bulles d'air contenues dans le fluide ;
l'envoi, par un second transducteur (14b) attaché en aval dans une direction dans laquelle le fluide s'écoule depuis le premier transducteur (14a), d'un second signal ultrasonore au fluide et pour recevoir un second signal de réflexion qui est le second signal ultrasonore réfléchi par des bulles d'air contenues dans le fluide ;
la réception, par le premier transducteur (14a), d'un second signal de transmission qui est le second signal ultrasonore transmis à travers le fluide ;
la réception, par le second transducteur (14b), d'un premier signal de transmission qui est le premier signal ultrasonore transmis à travers le fluide ;
la réalisation d'un calcul de corrélation d'un signal de réception obtenu lorsqu'un signal ultrasonore a été envoyé et reçu dans une direction d'un écoulement du fluide, et d'un signal de réception obtenu lorsque le signal ultrasonore a été envoyé et reçu dans une direction opposée à l'écoulement du fluide, et pour acquérir une première valeur de corrélation pour déterminer un premier volume d'écoulement indiquant le volume d'écoulement du fluide ;
la réalisation d'un calcul de corrélation d'une pluralité de signaux de réception obtenus en recevant une pluralité de signaux de réflexion obtenus lorsque le signal ultrasonore a été envoyé à travers le fluide à des intervalles de temps prédéterminés, et pour acquérir une seconde valeur de corrélation pour déterminer un second volume d'écoulement indiquant le volume d'écoulement du fluide ;

déterminer si la première valeur de corrélation dépasse ou non un premier seuil qui est fixé en considération du volume de bulles d'air contenues dans le fluide ;

déterminer si la seconde valeur de corrélation dépasse ou non un second seuil qui est fixé en considération du volume de bulles d'air contenues dans le fluide ;

le stockage d'un premier coefficient de correction, qui est utilisé dans la correction du premier volume d'écoulement, et d'un second coefficient de correction, qui est utilisé dans la correction du second volume d'écoulement ; et

la fourniture en sortie du premier volume d'écoulement qui a été corrigé en utilisant le premier coefficient de correction s'il est déterminé que la première valeur de corrélation dépasse le premier seuil, et la fourniture en sortie du second volume d'écoulement qui a été corrigé en utilisant le second coefficient de correction s'il est déterminé que la première valeur de corrélation ne dépasse pas le premier seuil et s'il est déterminé que la seconde valeur de corrélation dépasse le second seuil.

**11.** Procédé de mesure ultrasonore selon la revendication 10, comprenant en outré :

la détermination du volume de bulles d'air contenues dans le fluide en utilisant la première valeur de corrélation et la seconde valeur de corrélation.

# FIG. 1

# FIG. 2

EP 2 636 999 B1

# FIG. 3

# FIG. 4

| VOLUME OF AIR-BUBBLES | DETERMINATION SIGNAL J1 | DETERMINATION SIGNAL J2 | CORRECTION COEFFICIENT Cr | CORRECTION COEFFICIENT Kr |
|---|---|---|---|---|
| NONE TO VERY SMALL | 1 | 0 | — | — |
| SMALL | 1 | 1 | CALCULATE | CALCULATE |
| LARGE | 0 | 1 | — | CALCULATE |
| TOO LARGE | 0 | 0 | — | — |

# FIG. 5

| VOLUME OF AIR-BUBBLES | DETERMINATION SIGNAL J1 | DETERMINATION SIGNAL J2 | MEASUREMENT SIGNAL S4 |
|---|---|---|---|
| NONE TO VERY SMALL | 1 | 0 | FLOW VOLUME SIGNAL S12 |
| SMALL | 1 | 1 | FLOW VOLUME SIGNAL S12 |
| LARGE | 0 | 1 | FLOW VOLUME SIGNAL S22 |
| TOO LARGE | 0 | 0 | ERROR SIGNAL |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012051498 A
- JP 2005181268 A
- JP 2010181326 A
- WO 2006080182 A1
- EP 0031102 A2